# EUROPEAN PATENT APPLICATION

(11) **EP 1 170 898 A2**
(43) Date of publication of application: **09.01.2002**
(21) Application number: 01000272.3
(22) Date of filing: 05.07.2001
(51) Int. Cl.: H04L 1/18

(54) **Wireless communication**

(30) Priority: 06.07.2000 US 216293 P
(71) Applicant: Texas Instruments Inc., Dallas, Texas 75251 (US)
(72) Inventor: Nafie, Mohammed, Richardson, Texas (US); Schmidl, Timothy M., Dallas, TX 75243 (US); Dabak, Anand G., Plano, TX 75025 (US)
(74) Representative: Holt, Michael

(57) **Abstract**

A packetized transmission channel system with convolution coding with two or more codes having the convolutions separated and transmitted sequentially. Sequential transmission allows the receiver to check for errors and request transmission of either the next data block or a second convolution coding of erroneously-received data block. Sequences of erroneously-received packets for the same data may be combined for a redecoding with the decodings weighted according to the transmission channel characteristics during their transmissions.

## Description

### FIELD OF THE INVENTION

The invention relates to electronic devices, and more particularly to digital communication channel coding.

### BACKGROUND TO THE INVENTION

Demand for wireless information services via cell phones personal digital assistants (PDAs), and Internet appliances (IA) plus wireless networking among notebook computers is rapidly growing. However, the air interface in wireless communication typically has a large bit error rate due to effects such as noisy channels with multipath fading.

Channel coding for the air interface transmission channel using CDMA (code division multiple access) together with reception schemes such as rake detectors help mitigate the error rate. In particular, third generation wireless proposals include channel coding of data packets with rate 1/2 or 1/3 constraint-length-9 convolution codes or rate 1/3 turbo codes.

### SUMMARY OF THE INVENTION

The present invention provides a transmission system with channel coding data with differing convolution codes to create multiple coded data packets and sequentially ARQ decoding the packets with combination of erroneously received packets for joint re-decoding; and preferred embodiment weight these combinations with corresponding channel fading amplitudes.

This has advantages including improved performance.

### BRIEF DESCRIPTION OF THE DRAWINGS

The present invention will now be described in greater detail by way of example only, and with reference to the preferred embodiments illustrated in the figures of the accompanying drawings in which:
Figure 1 is a flow diagram for a preferred embodiment acknowledgement method.
Figure 2 shows a preferred embodiment convolution encoder.
Figure 3 illustrate another preferred embodiment flow diagram.

### DETAILED DESCRIPTION OF THE PREFERRED EMBODIMENTS

### Overview

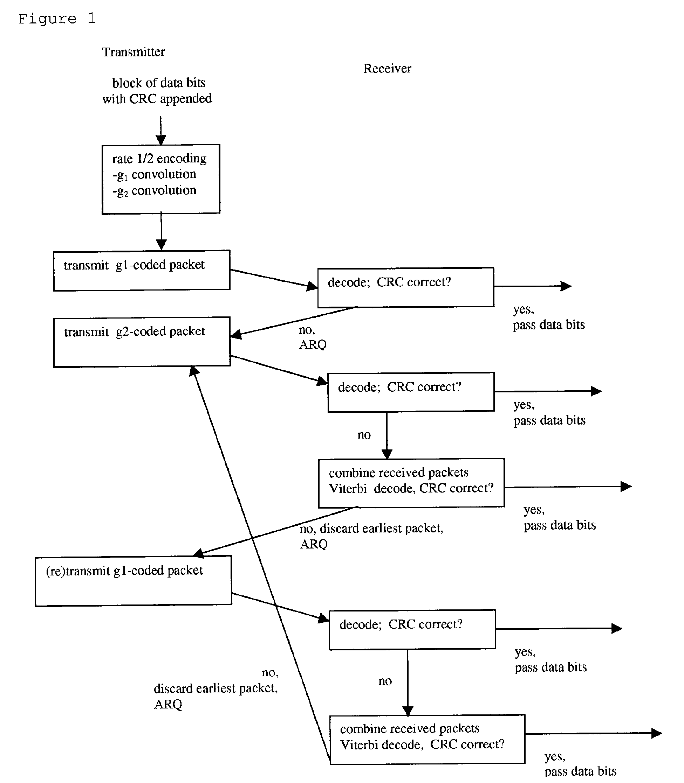

Preferred embodiment systems provide packetized digital communication with channel coding by convolution codes in which the separate convolutions are independently transmitted (or not) and a receiver may decode the convolutions independently, and when errors are indicated, may decode combined convolutions to achieve coding gain. Figure 1 is a flow diagram for a first preferred embodiment method in an automatic repeat request (ARQ) system. The method first computes and appends CRC check bits to a block of data bits, and then channel codes the block of bits with a rate 1/2 convolution code but does not interleave the two convolutions generated. The receiver may control transmission of the separate convolution-coded bit blocks in response to error detection in the bit blocks received.

### First preferred embodiments

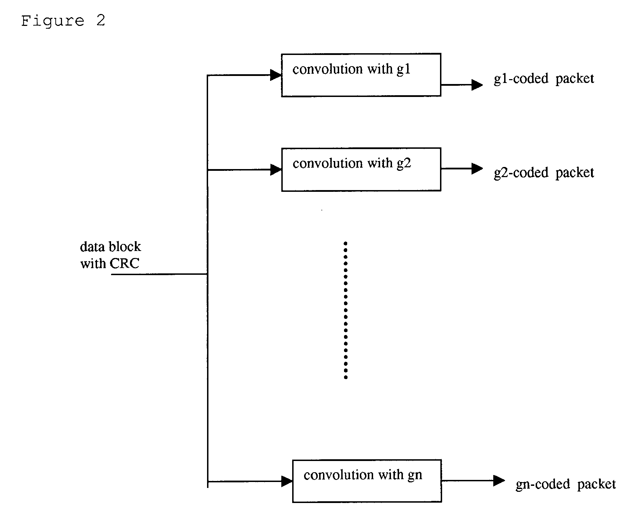

First preferred embodiment systems are ARQ (automatic repeat request) systems which uses first preferred embodiment methods of channel coding and decoding as illustrated in Figure 1. The first preferred embodiments proceed as follows presuming an input block of A data bits, where A may be an integer on the order of 200-2000.
(1) The transmitter generates L cyclic redundancy check (CRC) bits using a generator of length L where L is an integer such as 8, 12, 16, 24. For example, the generator could be D⁸ + D⁷ + D⁴ + D³ + D + 1. The L check bits are appended to the A data bits to yield a block of A+L bits.
(2) The transmitter convolution encodes the block of A+L bits from step (1) with generators g₁ and g₂ which each has a constraint length of N where N is an integer such as 9. Keep the two convolutions as separate blocks of A+L+N-1 bits each rather than the usual interleaved output. Denote these two blocks of A+L+N-1 bits as the g₁- and g₂-coded data packets. See Figure 2 which shows the general case of n convolution encoders g₁, g₂, .. gₙ generating n packets. In particular, gₖ expressed in terms of delays in a shift register, gₖ(D) = g_{k,0} + g_{k,1}D + ... + g_{k,N-1}D^{N-1} with g_{k,j} either 0 or 1, then for the bit block {bⱼ} the gₖ-coded packet is bit block {y_{k,i}} where y_{k,i} = 0≤j≤N-1 g_{k,j} b_{i-N-1-j} and the multiplications and additions are modulo 2 (i.e., the bits and code coefficients are elements of the Galois field GF(2)). Note that the input bit block {bᵢ} is padded with N-1 0's at each end so the sum is defined (initiation and flushing of the shift register), and this leads to the bit block {y_{k,i}} having N-1 more bits than the input bit block. (Note that with typical rate 1/2 convolution coding the output would be a packet {yᵢ} of twice the size (2(A+L+N-1) bits) made of even-odd interleaving of the two convolutions: y₂ᵢ = 0≤j≤N-1 g_{1,j} b_{i-N-1-j} and y₂ᵢ₊₁ = 0≤j≤N-1 g_{2,j} b_{i-N-1-j}.)
(3) The transmitter transmits the g₁-coded packet from step (2) to a receiver over the air interface; any modulation scheme may be used, such as BPSK or QPSK. The overall system may be a cellular arrangement of base stations and mobiles using CDMA with FDD or TDD.
(4) The receiver decodes the received g₁-coded packet to estimate the A data bits plus L check bits. The decoding may be by any convenient method such as hard decisions on each bit received. (a) If the check bits indicate no error, then these estimated A data bits are passed to the data application; and a positive acknowledgement (ACK) is sent from the receiver to the transmitter so that the transmitter can proceed to processing the next data block and discard the g₂-coded packet. That is, loop back to step (1) for the next block of data bits and continue. (b) Contrarily, if the L check bits indicate an error in the decoded g₁-coded packet; the receiver sends a negative acknowledgement (NAK) to the transmitter requesting the g₂-coded packet be transmitted.
(5) Upon receipt of a NAK, the transmitter sends the g₂-coded packet.
(6) The receiver decodes the received g₂-coded packet to estimate the A data bits plus L check bits; again, hard decisions on each bit received is used. (a) If the check bits indicate no error, then these estimated A data bits are passed to the data application; and a positive acknowledgement (ACK) is sent from the receiver to the transmitter so that the transmitter can proceed to processing the next data block (loop back to step (1)). (b) Contrarily, if the L check bits indicate an error in the g₂-coded packet; the receiver combines (interleaves) the hard-decision-decoded g₁-coded packet bits and the g₂-coded packet bits for decoding using the Viterbi algorithm. That is, the preferred embodiments revert to what would have been the typical encoding and decoding: the data bits and check bits are rate 1/2 convolution coded using the g₁ and g₂ codes with interleaved outputs, and are decoded with hard bit decisions plus the Viterbi algorithm for trellis path analysis. Note that the trellis has 2^{N-1} states, so for large constraint lengths sequential decoding could be used instead of Viterbi.
(7) (a) If the decoded combined g₁-coded and g₂-coded packets yield check bits indicating no error, then the estimated data bits are passed to the application for the data. (b) Contrarily, if the check bits estimated by the decoding of the combined packets indicate an error, the receiver sends a negative acknowledgement (NAK) to the transmitter, and the transmitter repeats the transmission of the g₁-coded packet.
(8) The receiver decodes the received repeated g₁-coded packet to estimate the A data bits plus L check bits; again, hard decisions. (a) If the check bits indicate no error, then these estimated A data bits are passed to the data application; and a positive acknowledgement (ACK) is sent from the receiver to the transmitter so that the transmitter can proceed to processing the next data block. (b) Contrarily, if the L check bits indicate an error in the repeated g₁-coded packet; the receiver combines (interleaves) the hard-decision-decoded g₂-coded packet bits (from step (6) and the just-decoded repeated g₁-coded packet bits for decoding using the Viterbi algorithm as in step (7). That is, the first decoding of the g₁-coded packet in step (4) is replaced by the decoding of this repeated g₁-coded packet.
(9)(a) If the decoded combined g1-coded and g₂-coded packets yield check bits indicating no error, then the estimated data bits are passed to the application for the data. (b) Contrarily, if the check bits estimated by the decoding of the combined packets indicate an error, the receiver sends a negative acknowledgement (NAK) to the transmitter, and the transmitter repeats the transmission of the g₂-coded packet and effectively has looped back to step (6) and continues in the loop until either achieving an error-free decoding or buffer overflow. Figure 1 illustrates the looping but omits indication of conditions to break out of the loop.

### Second preferred embodiments

Second preferred embodiment systems and methods extend the first preferred embodiment systems and methods including increasing the number of convolutions to n as indicated in Figure 2. In particular, for n = 3, the method would follow the foregoing steps (1)-(7)(a) of the n = 2 case but when the Viterbi decoding of the combined g₁-coded and g₂-coded packets yields an error, then the negative acknowledgement causes the transmitter to send the g₃-coded packet. Then separate packet decoding for the g₃-coded packet either is (a) error free and the method proceeds to the next data bit block or (b) the check bits indicate an error. In the event of an error, the second preferred embodiments apply Viterbi decoding to either (a) the combination of the g₁-coded, g₂-coded, and g₃-coded packets or (b) the combination of just the most recent two packets: the g₂-coded and g₃-coded packets. Again, if this Viterbi decoding yields errors, the second preferred embodiment methods loop back and the transmitter resends the g₁-coded packet. Then proceed as before: if an error is indicated, apply a Viterbi decoding of a combination of the previously-decoded packets.

In general for g₁, g₂, ... gₙ codes the transmission loop extends to allow for each of the gⱼ-coded packets to be sent if needed, and the Viterbi decoding at each stage may be of the last (up to) m decoded packets or of all of the previously decoded packets; m may be greater than or less than n. One simple case is to take m = n; that is, the most recently-received version of each of the gⱼ-coded packets is used in the Viterbi decoding. As described below, third preferred embodiments are analogous but add channel fading amplitude estimate weightings to the Viterbi decoding inputs.

Also, second preferred embodiments may use rate k/n convolution codes instead of the 1/n previously described. For example, a 2/3 rate convolution encoding may be used, so A+L bits are input in pairs to the g₁, g₂, and g₃ coders in Figure 2, and the three output packets each has (A+L+N-1)/2 bits. Thus instead of decoding after receiving the first packet (the g₁-coded bits), decoding occurs after two packets are received. And if an error is indicated, the third packet is sent to combine with the first two packets.

Further, the preferred embodiments may transmit the gⱼ-coded bits in more than one packet (e.g., the bit block size is large), or gⱼ-coded bits may be combined with gₖ-coded bits in a single packet (e.g., the bit block size is small).

Further, the decoding of the packets could generate soft decisions which are stored but converted to hard decisions for check bit analysis, and in the case of errors in the individual packet decodings, the soft decisions could be used in the Viterbi decoding of the combined packets.

### Third preferred embodiments

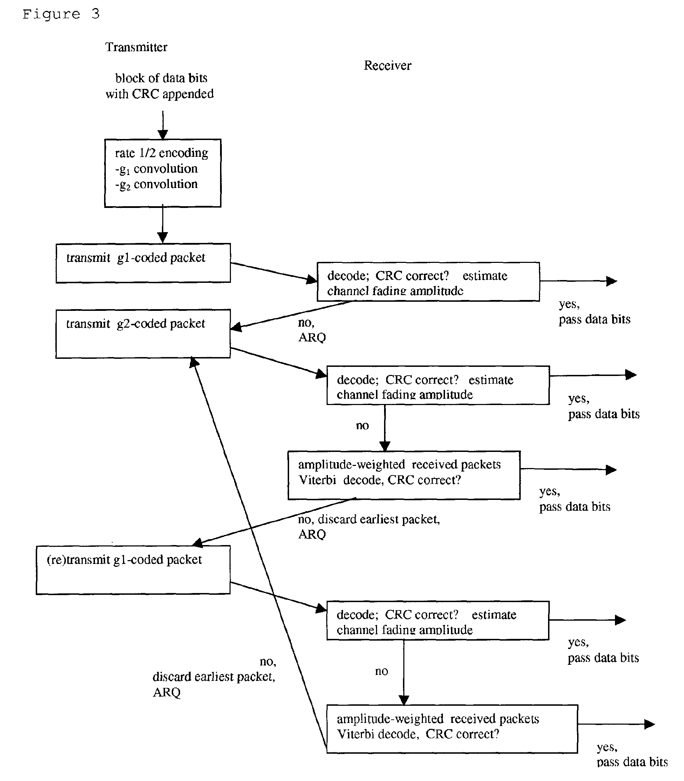

Third preferred embodiments follow the first and second preferred embodiments but weight the bits of the decoded packets for the Viterbi decoding of the combinations according to the channel conditions during reception of a packet. In particular, let αⱼ be the magnitude of an estimate of the fading amplitude of the channel during the transmission of the gⱼ-coded packet, {y_{j,i}}; see Figure 3. Such channel measurements are typically continuously made, for example, to allow for transmission power adjustments in systems. Then the combination of the hard-decision-decoded bits used for the Viterbi decoding by the third preferred embodiments is α₁y_{1,i}, α₂y_{2,i}, ..., and αₘy_{m,i} so that the bit decisions look something like soft decisions. That is, the hard-decision-decoded bits have been scaled by the channel amplitude of their transmission, so bits from small amplitudes, which are more likely to be erroneous, are de-emphasized in the Viterbi decoding. For this scaling the use of -1, +1 bits is more effective than 0, 1 bits. Also, this scaling by the channel fading amplitudes adds minimal computational complexity to the decoding.

Further, instead of using hard decisions, any measure of the soft decisions of the bits may be used.

For the case of using more than just the n most-recently-received packets (i.e., m > n) the third preferred embodiments use one of two methods: (1) when a packet coded with gj has been received more than once, select the hard-decision-decoded version of the gj-coded packet which had the larger channel fading amplitude, and combine with weightings as in the foregoing case of m≤n.

Alternatively, (2) use all of the received packets, including repeats, each with its own channel fading amplitude weighting.

### Modifications

The preferred embodiments may be varied while retaining the feature of differently coded packets of the same block of data plus check bits separately sent and a receiver which redecodes a combination of received packets when the packets decoded separately indicate errors.

For example, the weightings of the combined decoded packets having errors may be based on nonlinear functions of the corresponding channel fading amplitude, such as the squares of the fading amplitudes; with original soft-decision decoding of the individual packets and Viterbi decoding of the combination may include the fading channel weightings as multipliers for the distance measurements in the branch metrics so that the branch metrics emphasize differences for decodings of the packet with larger channel amplitude; the sizes of the bit blocks, convolution constraints, CRC length, bit reorganization (e.g., scrambling, spreading, reference bit insertions) and block partitions prior to and/or after convolution coding, and so forth may be varied or performed; and receivers would invert these further steps. Instead of convolution codes g₁, g₂, ... gₙ, other types of codes may be used in which additional parity bits are transmitted in each packet. Indeed, a block code of size (nm, m) where m is the packet size may be used.

## Claims

1. A method of transmission, comprising:
(a) convolution encoding a block of bits with each of codes g1, g2, ...gn where n is an integer greater than 1 to yield n packets of encoded bits;
(b) transmitting said packet encoded with g1 from step (a);
(c) transmitting said packet encoded with g2 from step (a) in response to a received request for transmission.

2. The method of claim 1, wherein said block of bits includes data bits plus check bits.

3. A method of reception, comprising:
(a) decoding a received packet of bits that includes data bits and check bits, said packet encoded with convolution code g1;
(b) when the decoding of step (a) indicates an error, receiving and decoding a packet of said data bits and check bits encoded with convolution code g2 where g1 differs from g2;
(c) when said decoding of step (b) indicates an error, decoding a combination of said packet encoded with code g1 with said packet encoded with code g2.

4. The method of claim 3, further comprising:
when the decoding of step (a) of claim 3 indicates an error, sending a request for a packet of said data bits and check bits encoded with convolution code g2.

5. The method of claim 3 or claim 4, wherein said decoding of step (c) uses the Viterbi algorithm.

6. The method of any of claims 3 to 5, wherein said decoding of step (c) of claim 3 combines said packet encoded with g1 and said packet encoded with g2 by weighting each of said packets according to a transmission channel fading amplitude during reception of said each of said packets.
